# EUROPÄISCHE PATENTANMELDUNG

(11) **EP 3 395 163 A1**
(43) Veröffentlichungstag der Anmeldung: **31.10.2018**
(21) Anmeldenummer: 18161955.2
(22) Anmeldetag: 15.03.2018
(51) Int. Cl.: A01G 9/14, A01G 13/02

(54) **SCHUTZVORRICHTUNG FÜR LANDWIRTSCHAFTLICHE REIHENKULTUREN**

(30) Priorität: 25.04.2017 AT 503352017
(71) Anmelder: Hoffelner, Andreas, 4550 Kremsmünster (AT)
(72) Erfinder: Hoffelner, Andreas, 4550 Kremsmünster (AT)
(74) Vertreter: Patentanwaltskanzlei Hübscher

(57) **Zusammenfassung**

Es wird eine Schutzvorrichtung für landwirtschaftliche Reihenkulturen mit einem Gerüst (1) beschrieben, das in Reihen (3) angeordnete und einander reihenweise gegenüberliegende Steher (2) sowie von den Stehern (2) getragene, quer zu den Steherreihen (3) verlaufende Bügel (5, 6) zur Aufnahme einer Schutzabdeckung (10) umfasst. Um vorteilhafte Konstruktionsverhältnisse zu schaffen, wird vorgeschlagen, dass die Bügel (5, 6), die eine den Reihenabstand der Steher (2) übersteigende Spannweite aufweisen, mit einem Ende (7) mit ihrem Steher (2) und mit dem anderen Ende (8) am Bügel (5, 6) des gegenüberliegenden Stehers (2) verbunden sind.

## Beschreibung

Die Erfindung bezieht sich auf eine Schutzvorrichtung für landwirtschaftliche Reihenkulturen mit einem Gerüst, das in Reihen angeordnete und einander reihenweise gegenüberliegende Steher sowie von den Stehern getragene, quer zu den Steherreihen verlaufende Bügel zur Aufnahme einer Schutzabdeckung umfasst.

Zum Schutz von landwirtschaftlichen Reihenkulturen, beispielsweise Obstkulturen, werden Gerüste zur Aufnahme einer Schutzabdeckung für die Reihenkulturen vorgesehen, wobei sich insbesondere bei Obstkulturen die Schwierigkeit ergibt, ein Gerüst zu schaffen, das einerseits die Bäume der Obstkultur überspannt und anderseits befahrbare Gassen zwischen den Baumreihen freilässt. Zu diesem Zweck ist es bekannt (EP 1 728 417 A2, WO 03/037070 A1), zwischen den einzelnen Bäumen einer Baumreihe Steher vorzusehen, die einerseits mit in Reihenlängsrichtung verlaufenden Firstseilen und anderseits mit quer zu den Steherreihen verlaufenden, die Gassen zwischen den Baumreihen überbrückenden Spannseilen verbunden sind, zwischen denen reihenparallele Verbindungsseile verlaufen, sodass sich für die Aufnahme der Schutzabdeckung ein Netz aus in Reihenlängsrichtung und quer dazu verlaufenden Seilen ergibt. Solche aus Stehern und einer Mehrzahl von First-, Spann- und Verbindungsseilen gebildete Gerüste sind allerdings aufwendig aufzustellen.

Vergleichsweise einfache Konstruktionsbedingungen für Gerüste zur Aufnahme einer Schutzabdeckung werden sichergestellt, wenn zwischen den in parallelen Reihen einander paarweise gegenüberliegenden Stehern bogenförmige Bügel zur Aufnahme der Schutzabdeckung quer zu den Steherreihen verlaufen (US 2006/0162247 A1). Nachteilig ist allerdings, dass der Scheitel der bogenförmigen Bügel in der Mitte zwischen den Steherreihen liegt, sodass solche Gerüste für den Einsatz bei Obstkulturen ungeeignet sind, weil die Steher zwischen den Baumreihen angeordnet werden müssen und daher eine Durchfahrt durch die Gassen zwischen den Baumreihen behindern.

Um Steher in den Gassen zwischen den Baumreihen zu vermeiden, ist es außerdem bekannt, die zwischen den Bäumen der Baumreihen angeordnete Steher mit bogenförmigen Bügeln zu versehen, die im Scheitelpunkt an den Stehern befestigt werden und sich demnach auf beiden Seiten der Steherreihen in den Gassenbereich zwischen den Baumreihen erstrecken. Zur gegenseitigen Abstützung der Steher und Bügel sind allerdings wiederum aufwendige Spannseile erforderlich.

Der Erfindung liegt somit die Aufgabe zugrunde, ein Gerüst für eine Schutzvorrichtung für landwirtschaftliche Reihenkulturen so auszugestalten, dass mit einfachen konstruktiven Mitteln eine stabile Konstruktion erhalten wird, die mit einem vergleichsweise geringen Montageaufwand aufgestellt werden kann und die Gassen zwischen den Kulturreihen freilässt.

Ausgehend von einer Schutzvorrichtung der eingangs geschilderten Art löst die Erfindung die gestellte Aufgabe dadurch, dass die Bügel, die eine den Reihenabstand der Steher übersteigende Spannweite aufweisen, mit einem Ende mit ihrem Steher und mit dem anderen Ende am Bügel des gegenüberliegenden Stehers verbunden sind.

Insbesondere beim Einsatz für Obstkulturen überspannen die an den Stehern zwischen den Bäume der Baumreihen angesetzten Bügel aufgrund dieser Konstruktionsvorgaben nicht nur die anschließende Gasse zwischen den benachbarten Baumreihen, sondern auch die benachbarte Baumreihe, sodass die Gasse zwischen benachbarten Baumreihen von Gerüstteilen freibleibt und die Bügel stets so gestaltet werden können, dass ihr Scheitelpunkt im Bereich der benachbarten Steherreihe liegt. Trotz des Übergriffs der benachbarten Steherreihe durch die Bügel wird eine stabile Gerüstkonstruktion erhalten, weil die Bügel jeweils mit den Bügeln der übergriffenen Steherreihe verbunden sind und daher in sich stabile, quer zu den Steherreihen verlaufende Baueinheiten bilden, sodass die zusätzlich erforderliche Abspannung des Gerüsts im Wesentlichen auf Abstützmaßnahmen in Reihenlängsrichtung beschränkt werden kann.

Besonders einfache Konstruktionsbedingungen ergeben sich, wenn die Bügel eine dem eineinhalbfachen Reihenabstand entsprechende Spannweite aufweisen, weil in diesem Fall hinsichtlich der Aufnahme der Schutzabdeckung symmetrische Verhältnisse in Bezug auf die Steherreihen geschaffen werden können. Der Verbindungsbereich zwischen den Bügeln liegt ja mittig der Gassen zwischen den Steherreihen und bildet jeweils den tiefsten Punkt für die Auflage der Schutzabdeckung, sodass z.B. Regenwasser mittig in die Gassen zwischen den Baumreihen abgeleitet werden kann.

Die Bügelform kann weitgehend frei gestaltet werden. So ist beispielsweise eine Auflage in Form eines Zeltdachs möglich. Im Allgemeinen werden jedoch insbesondere hinsichtlich der Aufnahme der Schutzabdeckung günstigere Verhältnisse geschaffen, wenn die Bügel stetig gekrümmt sind und insbesondere einen Kreisbogen bilden.

Grundsätzlich können die Steher und die Bügel voneinander getrennte Konstruktionsteile bilden. Hinsichtlich des Montageaufwands und der Gerüststabilität ist es allerdings von Vorteil, die Bügel einstückig mit den Stehern auszubilden.

Damit die Gerüststabilität ohne zusätzlichen Konstruktionsaufwand verbessert werden kann, können die Bügel abwechselnd in entgegengesetzter Richtung von den Stehern einer Reihe abstehen. Dies bedeutet, dass die Bügel der Steher einer Steherreihe abwechselnd die beiden Gassen überspannen, zwischen denen die Steherreihe verläuft.

Die sich von ihrem Steher nach außen erstreckenden Bügel einer Außenreihe der Steher kragen nach der Verbindung mit den Bügeln der benachbarten Steherreihe frei nach außen. Zur Abstützung der sonst frei auskragenden Bügelenden können diese Bügel bis zu einer Zusatzreihe von Stehern verlängert werden, was eine vorteilhafte Abstützung dieser Außenbügel mit sich bringt, und zwar unter Ausbildung einer Außengasse zwischen der Außenreihe der Steher und den Zusatzstehern. Soll auf eine solche Außengasse verzichtet werden, so kann das frei auskragende Bügelende gekappt werden. In diesem Fall enden die sich von ihrem Steher nach außen erstreckenden Bügel einer Außenreihe der Steher mit der Verbindung zu den Bügeln der benachbarten Steherreihe.

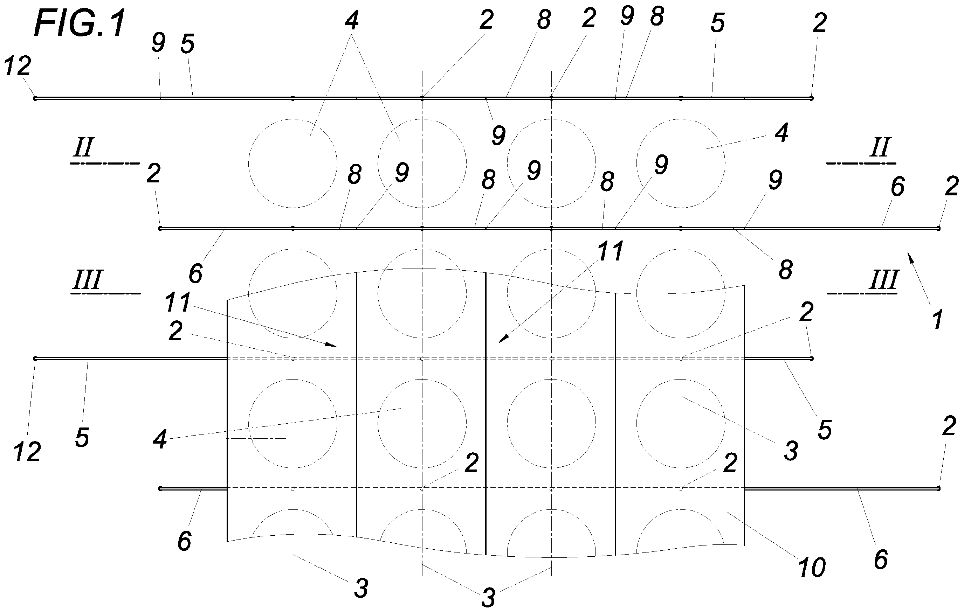

In der Zeichnung ist der Erfindungsgegenstand beispielsweise dargestellt. Es zeigen
- Fig. 1: eine erfindungsgemäße Schutzvorrichtung für landwirtschaftliche Reihenkulturen ausschnittsweise in einer zum Teil aufgerissenen Draufsicht,
- Fig. 2: einen Schnitt nach der Linie II-II der Fig. 1,
- Fig. 3: einen Schnitt nach der Linie III-III der Fig. 1 und
- Fig. 4: eine der Fig. 3 entsprechende Darstellung einer Konstruktionsvariante einer erfindungsgemäßen Schutzvorrichtung.

Die am nicht einschränkenden Beispiel einer Obstkultur dargestellte Schutzvorrichtung weist ein Gerüst 1 mit Stehern 2 auf, die in strichpunktiert angedeuteten Reihen 3 zwischen den in gleicher Reihe gesetzten Obstbäumen 4 angeordnet sind und einander reihenweise gegenüberliegen. Die Steher 2 tragen gegebenenfalls höhenverstellbar Bügel 5, 6 die quer zu den Steherreihen 3 verlaufen und eine den Reihenabstand übersteigende Spannweite aufweisen, sodass sich die Bügel 5, 6 mit ihren dem steherseitigen Ende 7 gegenüberliegenden Enden 8 nicht auf dem jeweils gegenüberliegenden Steher 2, sondern auf den von den gegenüberliegenden Stehern getragenen Bügeln 5, 6 über Verbindungen 9 abstützen. Das Gerüst 1 bedarf daher zur Verbindung der einander quer zu den Steherreihen 3 gegenüberliegenden Steher 2 keiner zusätzlichen Verbindungsmittel. Es genügt somit eine entsprechende Verspannung der sich aus den miteinander verbundenen Bügeln 5, 6 ergebenden, quer zu den Steherreihen 3 verlaufenden Baueinheiten des Gerüsts 1 in Reihenlängsrichtung, wie dies an sich bekannt und daher aus Übersichtlichkeitsgründen nicht dargestellt ist.

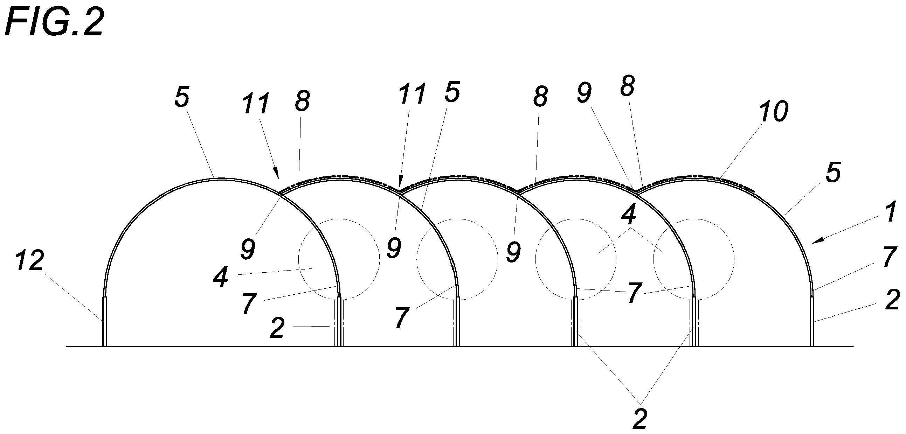

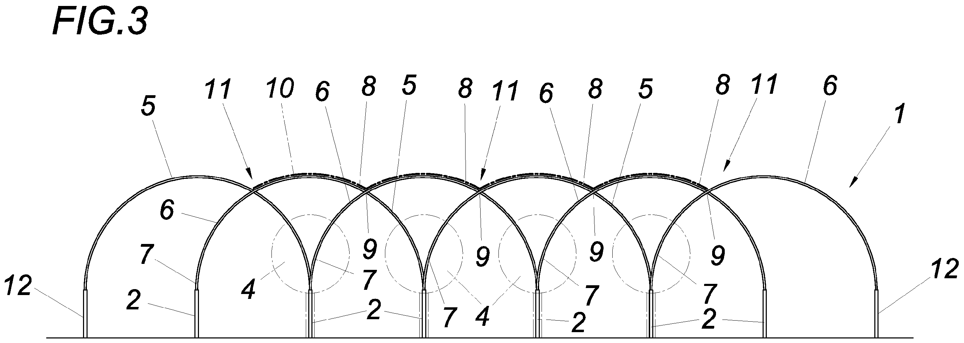

Obwohl die Form der Bügel 5, 6 unterschiedlich ausfallen kann - es kommt ja nur darauf an, dass die Bügel 5, 6 die jeweils benachbarte Baumreihe überspannen und eine Auflage für eine Schutzabdeckung 10 bilden -, ergeben sich besonders einfache Konstruktionsbedingungen, wenn die Bügel 5, 6 vorzugsweise entsprechend einem Kreisbogen stetig gekrümmt verlaufen, wie dies den Fig. 2 bis 4 entnommen werden kann. Entspricht dabei die in Richtung des Reihenabstands gemessene Spannweite der Bügel 5, 6 dem eineinhalbfachen Reihenabstand, so bilden die Verbindungen 9 zwischen den Bügeln 5, 6 die jeweils tiefste Auflage für die Schutzabdeckung 10 in der Mitte der sich zwischen den Steherreihen 3 ergebenden Gassen, sodass die Schutzabdeckung 10 in diesem Bereich eine Sammel- und Ableitstelle 11 für Regenwasser bilden kann.

Die Steher 2 sind aus Darstellungsgründen gegenüber den Bügeln 5, 6 abgesetzt. Es ist aber selbstverständlich nicht zwingend, von den Stehern 2 gesonderte Bügel 5, 6 vorzusehen. Die Bügel 5, 6 können auch einstückig mit den Stehern 2 ausgebildet sein, was hinsichtlich der Stabilität des Gerüsts 1 Vorteile mit sich bringt.

Da die Bügel 5, 6 stets von einem Steher 2 ausgehen und sich auf den Bügeln 5, 6 der in Erstreckungsrichtung der Bügel 5, 6 benachbarten Steher 2 abstützen, fehlt für die sich nach außen erstreckenden Bügel 5, 6 einer Außenreihe der Steher 2 eine entsprechende Abstützung der Bügelenden 8. Nach der Fig. 2 sind das die Bügel 5 der linken Außenreihe. Um hinsichtlich der Außenbügel 5 gute Abstützbedingungen zu schaffen, kann eine Zusatzreihe von Stehern 12 außerhalb der Baumreihen vorgesehen sein, sodass die entsprechend verlängerten Außenbügel 5 an den Zusatzstehern 12 abgestützt werden können.

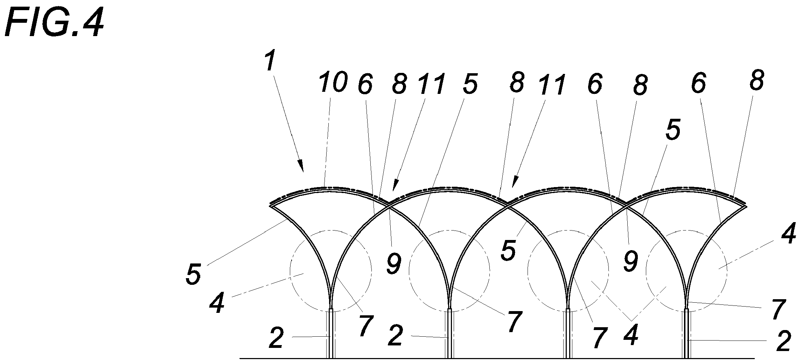

Eine andere Möglichkeit, die Außenreihe der sich nach außen erstreckenden Bügel 5, 6 abzuschließen, besteht gemäß der Fig. 4 darin, die sich von ihren Stehern 2 nach außen erstreckenden Bügel 5, 6 mit der Verbindung 9 zu den Bügeln 5, 6 der benachbarten Steherreihen 3 enden zu lassen.

Um die Stabilität des Gerüsts 1 zu verbessern, können schließlich die Bügel 5, 6 abwechselnd in entgegengesetzter Richtung von den Stehern 2 einer Reihe 3 abstehen. In der Zeichnung wechseln die Querreihen der Steher 2 mit den sich von den Stehern 2 nach links erstreckenden Bügeln 5 mit den Querreichen der von den Stehern 2 nach rechts auskragenden Bügeln 6 ab.

## Patentansprüche

1. Schutzvorrichtung für landwirtschaftliche Reihenkulturen mit einem Gerüst (1), das in Reihen (3) angeordnete und einander reihenweise gegenüberliegende Steher (2) sowie von den Stehern (2) getragene, quer zu den Steherreihen (3) verlaufende Bügel (5, 6) zur Aufnahme einer Schutzabdeckung (10) umfasst, **dadurch gekennzeichnet, dass** die Bügel (5, 6), die eine den Reihenabstand der Steher (2) übersteigende Spannweite aufweisen, mit einem Ende (7) mit ihrem Steher (2) und mit dem anderen Ende (8) am Bügel (5, 6) des gegenüberliegenden Stehers (2) verbunden sind.

2. Schutzvorrichtung nach Anspruch 1, **dadurch gekennzeichnet, dass** die Bügel (5, 6) eine dem eineinhalbfachen Reihenabstand entsprechende Spannweite aufweisen.

3. Schutzvorrichtung nach Anspruch 1 oder 2, **dadurch gekennzeichnet, dass** die Bügel (5, 6) stetig gekrümmt sind.

4. Schutzvorrichtung nach Anspruch 3, **dadurch gekennzeichnet, dass** die Bügel (5, 6) einen Kreisbogen bilden.

5. Schutzvorrichtung nach einem der Ansprüche 1 bis 4, **dadurch gekennzeichnet, dass** die Bügel (5, 6) einstückig mit den Stehern (2) ausgebildet sind.

6. Schutzvorrichtung nach einem der Ansprüche 1 bis 5, **dadurch gekennzeichnet, dass** die Bügel (5, 6) abwechselnd in entgegengesetzter Richtung von den Stehern (2) einer Reihe (3) abstehen.

7. Schutzvorrichtung nach einem der Ansprüche 1 bis 6, **dadurch gekennzeichnet, dass** die sich von ihren Stehern (2) nach außen erstreckenden Bügel (5, 6) einer Außenreihe der Steher (2) bis zu einer Zusatzreihe von Stehern (12) verlängert sind.

8. Schutzvorrichtung nach einem der Ansprüche 1 bis 6, **dadurch gekennzeichnet, dass** die sich von ihren Stehern (2) nach außen erstreckenden Bügel (5, 6) einer Außenreihe der Steher (2) mit der Verbindung (9) zu den Bügeln (5, 6) der benachbarten Steherreihe (3) enden.
